# EUROPÄISCHE PATENTSCHRIFT

(11) **EP 1 081 454 B1**
(45) Veröffentlichungstag und Bekanntmachung des Hinweises auf die Patenterteilung: **23.10.2002**
(21) Anmeldenummer: 00118701.2
(22) Anmeldetag: 30.08.2000
(51) Int. Cl.: G01B 7/02, G01B 7/30, G01D 5/20

(54) **Induktiver Positionssensor**
Inductive position sensor
Capteur de position inductif

(30) Priorität: 01.09.1999 DE 19941464
(43) Veröffentlichungstag der Anmeldung: 07.03.2001
(73) Patentinhaber: Hella KG Hueck & Co., 59552 Lippstadt (DE)
(72) Erfinder: Hobein, Dirk, 59555 Lippstadt (DE); Irle, Henning, 59557 Lippstadt (DE); Kost, Norbert, 59590 Geseke (DE); Schmidt, Franz-Josef, 33154 Salzkotten (DE)

(56) Entgegenhaltungen:
- EP-A- 0 795 738
- FR-A- 2 182 400
- US-A- 4 255 682
- US-A- 4 893 078
- US-A- 4 918 997
- US-A- 5 642 044

## Beschreibung

Die Erfindung betrifft einen induktiven Winkelsensor, insbesondere für ein Kraftfahrzeug, mit einer Oszillatorschaltung, die ein periodisches Wechselspannungssignal erzeugt und in eine Erregerspule einkoppelt, mit mehreren Empfangsspulen, die jeweils eine sich periodisch wiederholende Schleifenstruktur ausbilden und deren Anordnung insgesamt eine Empfangsgeometrie ausbildet, mit einer Auswerteschaltung zur Auswertung der in den Empfangsspulen induzierten Signale, und mit einem beweglichen induktiven Koppelelement, welches die Stärke der induktiven Kopplung zwischen Erregerspule und den Empfangsspulen beeinflußt.

Ein Positionssensor mit den vorgenannten Merkmalen ist in der nicht vorveröffentlichten Patentanmeldung DE 199 17 240 beschrieben.

Aus der US-A-4 893 078 ist ein induktiver Positionssensor bekannt, bei dem vier Erreger- oder Senderspulen mit einem Wechselspannungssignal betrieben werden. Die Sendespulen haben dabei sich periodisch wiederholende Schleifenstrukturen. Insgesamt bilden diese Sendespulen zwei "Sendegeometrien" aus. Die Empfangsspule ist mit den Erregerspulen über ein bewegliches induktives Koppelelement gekoppelt.

Bei der Erfassung von Winkeln oder Wegen werden bei verschiedenen Applikationen hohe Anforderungen an die Genauigkeit und Auflösung gestellt.

Der in der Patentanmeldung DE 199 17 240 dargestellte Sensor erreicht bei ca. 0,2 % Genauigkeit seine Grenze. Bei Verwendung desselben Sensorprinzips soll eine Verbesserung der Sensordaten um den Faktor 10 erzielt werden. Eine Möglichkeit zur Erhöhung der Genauigkeit ist es, das aus der Meßtechnik allgemein bekannte Noniusprinzip zu verwenden. Dazu müssen bei der Induktivsensorik im Prinzip zwei separate Sensoren mit unterschiedlicher Teilung aufgebaut werden.

Es ist die Aufgabe der Erfindung eine induktiven Winkelsensor zu schaffen, der auf einfache und kostengünstige Weise eine besonders präzise Erfassung von Winkeln ermöglicht.

Diese Aufgabe wird erfindungsgemäß dadurch gelöst, daß der Winkelsensor nach Anspruch 1 zwei Empfangsgeometrien und zwei Koppelelemente aufweist, daß die Periodizität der Schleifenstrukturen der Empfangsspulen in den beiden Empfangsgeometrien verschieden ist, daß die Koppelelemente jeweils eine periodische Geometrie aufweisen, daß die Periodizität der beiden Koppelelemente verschieden ist, daß die Periodizität der Schleifenstruktur jeweils einer Empfangsspule mit der Periodizität der Geometrie jeweils eines Koppelelements übereinstimmt und daß über den Gesamtmeßbereich des Winkelsensors die Anzahlen der periodischen Wiederholungen in den Schleifenstrukturen der Empfangsspulen der beiden Empfangsgeometrien zueinander in einem nichtganzzahligen Verhältnis stehen.

Im folgenden werden das Funktionsprinzip sowie Ausführungsbeispiele des erfindungsgemäßen induktiven Winkelsensors anhand der Zeichnungen dargestellt und in seiner Funktionsweise näher erläutert.

Spezielle Ausgestaltungen und Weiterbildungen ermöglichen vorteilhafterweise sogar die absolute Erfassung von Winkeln > 360°, sowie darüber hinaus sogar die Erfassung von Drehmomenten.

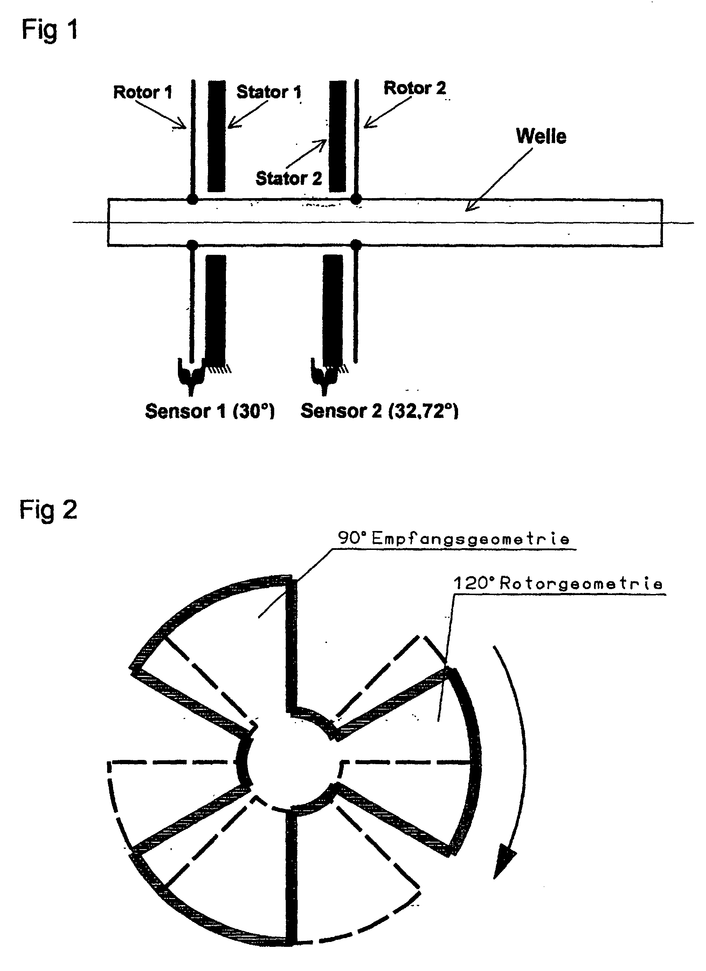

Das in der Figur 1 dargestellte Beispiel zeigt eine hochpräzise Winkelsensorik für eine 360°-Erfassung. Dabei hat der Sensor 1 hat eine Winkelperiodizität von 30° (360°/12), der Sensor 2 demgegenüber eine Winkelperiodizität von 32,72° (360°/11).

Aus den Verhältnissen des Sensorsignals 1 und Sensorsignals 2 kann der absolute Winkel zwischen 0 und 360° berechnet werden. Die gewünschte Erhöhung der Genauigkeit resultiert daraus, daß die 30°, wie oben beschrieben, jeweils mit einer Genauigkeit von 0,2 ... 0,3 % erfaßt werden, jetzt aber ein absoluter Winkel von 360° erfaßt werden kann. Auf die 360° bezogen ergibt sich damit eine Genauigkeit von 0,0167 ... 0,025 %.

Nun ist es recht aufwendig,zwei unabhängige Sensoren aufzubauen und es ist die Frage zu stellen, wie dieser Aufbau vereinfacht werden kann. Zum Beispiel wäre es vorteilhaft wenn beide Statoren (Empfangsgeometrien) in einer Ebene zusammengefaßt werden könnten. In diesem Fall ist aber zu erwarten, daß sich die Magnetfelder der beiden Rotoren (Koppelelemente) gegenseitig beeinflussen, was letztendlich zu einem nicht bzw. nur schwierig auswertbaren Verhalten der Sensoren führen könnte. Untersuchungen mit verschiedenen Geometrien zeigen jedoch, daß trotzdem ein sinnvolles Sensorverhalten möglich ist. Dies soll an folgendem Beispiel verdeutlicht werden.

Anhand der Figur 2 wird eine 90°-Empfangsgeometrie betrachtet, die mit einem 120°-Rotor betrieben wird.

Das vom Rotor in die Empfangsspule eingekoppelte Magnetfeld führt zu einer Signalspannungsamplitude an der Empfangsspule die proportional dem Ausdruck ∫ Bᵣ dA ist (Bᵣ: vom Rotor hervorgerufene Magnetfeldstärke in der Empfangsspule, A: Fläche der Empfangsspule). Man kann nun zeigen, daß dieses Integral näherungsweise unabhängig von der relativen Stellung des Rotors zum Stator ist. Anschaulich läßt sich dies dadurch verdeutlichen, daß die positiv zu zählenden Anteile des Integrals ebenso groß sind wie die negativ zu zählenden Anteile.

Eine vergleichbare Betrachtung für eine 120°-Empfangsgeometrie, die mit einem 90°-Rotor betrieben wird, führt zu demselben Ergebnis. Da für die Überlagerung der Magnetfelder das Superpositionsprinzip angewendet werden kann, bedeutet dies, daß es möglich ist, mehrere Sensorstrukturen mit unterschiedlichen Winkeln ineinander zu verschachteln.

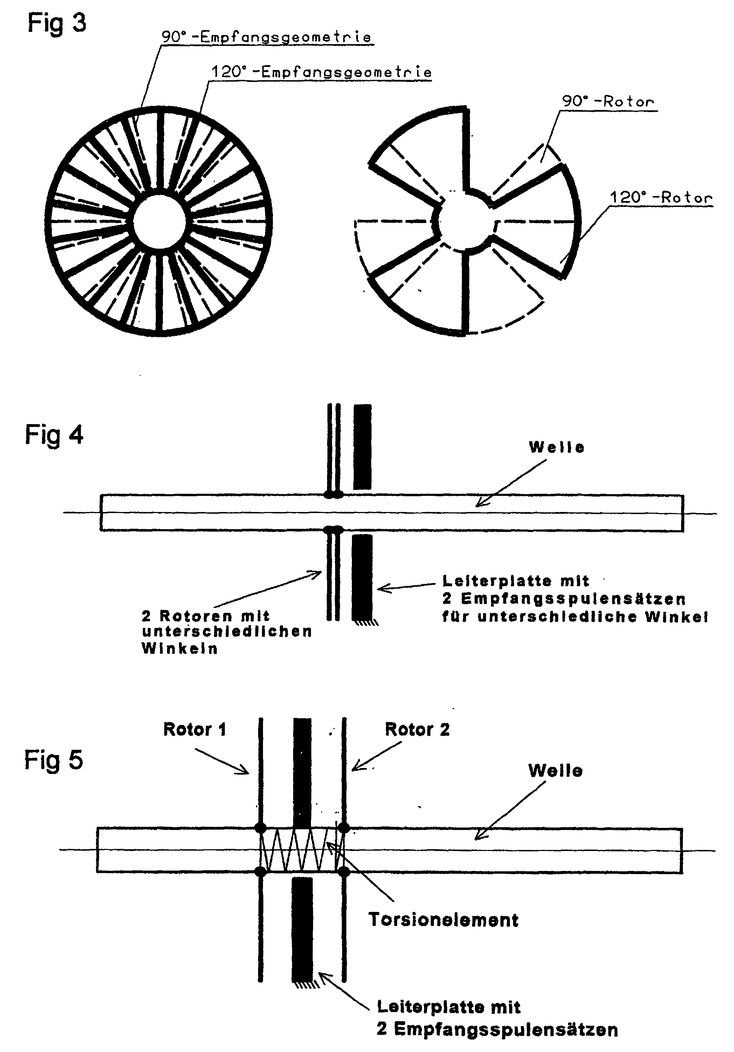

Ein Beispiel für eine solche Anordnung ist in der Figur 3 dargestellt. Im Stator werden zwei Empfangsspulen mit unterschiedlichen Winkeln (z.B. 120° und 90°) realisiert. Der Rotor wird aus zwei Einzelrotoren (in diesem Beispiel 120° und 90°) aufgebaut, die direkt übereinander liegen können. Da, wie oben ausgeführt, der 120°-Rotor die 90°-Empfangsgeometrie und der 90°-Rotor die 120°-Empfangsgeometrie nicht störend beeinflußt, erhalten wir an den Empfangsspulen zwei unabhängige Winkelinformationen, wie es das Noniusprinzip erfordert. Es ist damit also möglich einen sehr einfachen Sensor aufzubauen, der die gewünschten Resultate liefert.

Es sind für unterschiedliche Applikationen folgende Varianten möglich:
1. Erfassung von Winkeln mit hoher Genauigkeit, z.B. für die Erfassung des Lenkwinkels in einem Kraftfahrzeug (siehe Figur 4).
   Zwei Empfangsspulensätze mit verschiedenen Winkelperiodizitäten sind in einer Ebene angeordnet, zwei Rotoren mit entsprechenden unterschiedlichen Periodizitäten sind parallel zueinander in (näherungsweise) einer zweiten Ebene angeordnet.
2. Erfassung von Winkeln mit hoher Genauigkeit und Winkeln > 360° (ebenfalls für Lenkwinkelerfassung geeignet):
   Zwei Empfangsspulensätze mit unterschiedlichen Winkelperiodizitäten befinden sich in einer Ebene, zwei Rotoren mit unterschiedlichen Winkelperiodizitäten, ein Rotor davon mit einer geeigneten Getriebeübersetzung.
3. Erfassung von Drehmomenten unter Verwendung eines Torsionselements (siehe Fig. 5):
   Zwei Empfangsspulensätze mit unterschiedlichen Winkelperiodizitäten sind in einer Ebene angeordnet, ein Rotor an einem Ende eines Torsionselements, ein zweiter Rotor am gegenüberliegenden Ende des Torsionselements. Das Drehmoment kann über eine Differenzmessung erfaßt werden.

## Patentansprüche

1. Induktiver Winkelsensor, insbesondere für ein Kraftfahrzeug, mit einer Oszillatorschaltung, die ein periodisches Wechselspannungssignal erzeugt und in eine Erregerspule einkoppelt, mit mehreren Empfangsspulen, die jeweils eine sich periodisch wiederholende Schleifenstruktur ausbilden und deren Anordnung insgesamt zwei Empfangsgeometrien ausbildet, mit einer Auswerteschaltung zur Auswertung der in den Empfangsspulen induzierten Signale, und mit zwei beweglichen induktiven Koppelelemenen welche die Stärke der induktiven Kopplung zwischen der Erregerspule und den Empfangsspulen beeinflussen,
wobei die Periodizität der Schleifenstrukturen der Empfangsspulen in den beiden Empfangsgeometrien verschieden ist,
die Koppelelemente jeweils eine periodische Geometrie aufweisen und die Periodizität der beiden Koppelelemente verschieden ist,
die Periodizität der Schleifenstruktur jeweils einer Empfangsspule mit der Periodizität der Geometrie jeweils eines Koppelelements übereinstimmt,
und über den Gesamtmeßbereich des Winkelsensors die Anzahlen der periodischen Wiederholungen in den Schleifenstrukturen der Empfangsspulen der beiden Empfangsgeometrien zueinander in einem nichtganzzahligen Verhältnis stehen.

2. Winkelsensor nach Anspruch 1, **dadurch gekennzeichnet, daß** die beiden Koppelelemente parallel zueinander angeordnet sind.

3. Induktiver Winkelsensor nach Anspruch 1, **dadurch gekennzeichnet, daß** eines der Koppelelemente über ein Getriebe angetrieben wird.

4. Induktiver Winkelsensor nach Anspruch 1, **dadurch gekennzeichnet, daß** die Auswerteschaltung die Informationen der einzelnen Empfangsspulensätze zur Plausibilitätskontrolle auswertet.

## Claims

1. Inductive angle sensor, particularly for a motor vehicle, having an oscillator circuit which generates a periodic alternating current signal and couples it into an exciter coil, having a plurality of receiving coils, each comprising a periodically self-repeating loop structure and the arrangement of which overall comprises two receiving geometries, having an evaluation circuit for evaluating the signals induced in the receiving coils, and having two movable inductive coupling elements, which influence the strength of the inductive coupling between the exciter coil and the receiving coils, whereby the periodicity of the loop structures of the receiving coils is different in the two receiving geometries, the coupling elements each have a periodic geometry and the periodicity of the two coupling elements is different, the periodicity of the loop structure of each receiving coil coincides with the periodicity of the geometry of a coupling element, and over the entire range of the angle sensor the numbers of periodic repetitions in the loop structures of the receiving coils of the two receiving geometries are in a non-integer relation to each other.

2. Angle sensor according to Claim 1, **characterised in that** the two coupling elements are arranged parallel to each other.

3. Inductive angle sensor according to Claim 1, **characterised in that** one of the coupling elements is driven via gearing.

4. Inductive angle sensor according to Claim 1, **characterised in that** the evaluation circuit evaluates the information from the individual receiving coil sets for plausibility checking.

## Revendications

1. Capteur d'angles inductif, en particulier pour un véhicule, comportant un circuit d'oscillateur qui engendre un signal de courant alternatif périodique et l'injecte dans une bobine d'excitation, plusieurs bobines de réception qui forment chacune une structure en boucle à répétition périodique et dont l'agencement réalise au total deux géométries de réception, un circuit d'évaluation pour évaluer les signaux induits dans les bobines de réception, et deux éléments de couplage inductifs mobiles qui influencent la puissance du couplage inductif entre la bobine d'excitation et les bobines de réception, dans lequel :
la périodicité des structures en boucles des bobines de réception est différente dans les deux géométries de réception,
les éléments de couplage présentent chacun une géométrie périodique et la périodicité des deux éléments de couplage est différente,
la périodicité de la structure en boucle d'une bobine de réception respective coïncide avec la périodicité de la géométrie d'un élément de couplage respectif,
et sur toute la plage de mesure du capteur d'angles, les nombres des répétitions périodiques dans les structures en boucles des bobines de réception des deux géométries de réception sont dans un rapport non-entier l'un par rapport à l'autre.

2. Capteur d'angles selon la revendication 1, **caractérisé en ce que** les deux éléments de couplage sont agencés parallèlement l'un à l'autre.

3. Capteur d'angles inductif selon la revendication 1, **caractérisé en ce qu'**un des éléments de couplage est entraîné via une transmission.

4. Capteur d'angles inductif selon la revendication 1, **caractérisé en ce que** le circuit d'évaluation évalue les informations des groupes individuels de bobines de réception pour le contrôle de plausibilité.
